# EUROPEAN PATENT SPECIFICATION

(11) **EP 3 699 407 B1**
(45) Date of publication and mention of the grant of the patent: **09.02.2022**
(21) Application number: 17929391.5
(22) Date of filing: 07.12.2017
(51) Int. Cl.: F01N 3/035, F01N 3/28, F01N 13/00, B60K 13/04, F01N 3/021, F01N 3/10, F01N 3/20, F01N 13/10, F01N 13/18

(54) **GENERALIZED INTEGRATED DOC-DPF-SCR AFTER-TREATMENT APPARATUS**
GENERALISIERTE INTEGRIERTE DOC-DPF-SCR-NACHBEHANDLUNGSANLAGE
APPAREIL DE POST-TRAITEMENT DE DOC-DPF-SCR INTÉGRÉ GÉNÉRALISÉ

(30) Priority: 18.10.2017 CN 201710971629
(43) Date of publication of application: 26.08.2020
(73) Proprietor: Weichai Power Co., Ltd., Weifang, Shandong 261061 (CN); Weichai Power Emission Solutions Technology Co., Ltd., Weifang, Shandong 261061 (CN)
(72) Inventor: LIU, Xinglong, Weifang Shandong 261061 (CN); GAO, Wei, Weifang Shandong 261061 (CN); WANG, Dongsheng, Weifang Shandong 261061 (CN); WANG, Yibao, Weifang Shandong 261061 (CN); WANG, Fengshuang, Weifang Shandong 261061 (CN)
(74) Representative: Ipside
(86) International application number: PCT/CN2017/114958
(87) International publication number: WO 2019/075877

(56) References cited:
- CN-A- 105 402 007
- CN-A- 106 121 779
- CN-A- 106 285 876
- CN-U- 204 851 395
- CN-U- 206 309 451
- CN-U- 206 309 452
- JP-B2- 5 114 219
- KR-A- 20120 130 597

## Description

The present application claims the priority to Chinese patent application No. 201710971629.4, titled "GENERALIZED INTEGRATED DOC-DPF-SCR POST-TREATMENT APPARATUS", filed with the China National Intellectual Property Administration on October 18, 2017.

### FIELD

The present application relates to the technical field of exhaust gas treatment for diesel vehicles, and in particular to a generalized integrated DOC-DPF-SCR post-treatment apparatus.

### BACKGROUND

As the emission standard on exhaust gas pollutants from diesel vehicles becomes increasingly stringent in various countries, contents of particulate matters, nitrogen oxides (NOx), hydrocarbons (HC) and Carbon monoxide (CO) and the like in the exhaust gas pollutants need to be controlled to meet the Europe VI emission standard and China VI emission standard. Therefore, it is required to integrate a diesel oxidation catalytic converter (DOC), a diesel particulate filter (DPF) and a selective catalytic reduction converter (SCR) in a case-type post-treatment apparatus.

In a conventional case-type post-treatment apparatus, the DOC-DPF, the SCR and an urea mixer are integrated. The DOC and DPF are connected in series to form a DOC-DPF. Two SCRs are abreast arranged on a same side of the case, reducing a dimension in a length direction of the post-treatment apparatus. The DOC-DPF, the two SCRs, the urea mixer and the exhaust pipe are arranged in parallel in the case, and communication of corresponding components is realized through end covers at two ends of the case. During an operation of the apparatus, the exhaust gas enters the DOC-DPF unit from an inlet of the post-treatment apparatus for oxidation catalysis and particle filtering, then the exhaust gas enters the urea mixer through an end cover while urea is sprayed into the urea mixer to form urea spray, and the urea spray is uniformly mixed with the exhaust gas to form uniformly mixed gas. After discharging out from the urea mixer, the uniformly mixed gas enters the two SCRs through another end cover for catalytic conversion on nitrogen oxides (NOx). Finally, the exhaust gas is discharged from the SCRs into an exhaust pipe and is discharged away.

Although post-treatment can be performed well on the exhaust gas with this case-type post-treatment apparatus, the layout structure of the case-type post-treatment apparatus requires large reserved dimensions on the entire vehicle accessories in the width and height directions, which is difficult to meet many matching requirements. Generally, in order to facilitate the maintenance of the DPF, the DPF is required to be arranged at the outside on an upper position when assembling the case-type post-treatment apparatus onto the vehicle, therefore, in order to meet this requirement, the case-type post-treatment apparatus has to be installed on the right side of the vehicle, failing to arranging this apparatus on the left side of the vehicle.

The patent application No. CN206309452U provides a box exhaust aftertreatment device, which includes a case, a mixing module and multiple catalyst support subassembly. The catalyst support subassemblies include cylindric first, second, third, fourth catalyst support subassemblies. The case has an exhaust inlet, an inlet cavity, an outlet chamber body and air outlet. The case is equipped with a first baffle and a second baffle of the same structure, and first baffle has a first diagonal. The first baffle also includes a first hole in communication with the first catalyst support subassembly, a second hole in communication with the second catalyst support subassembly, a third hole in communication with the third catalyst support subassembly, a fourth hole in communication with the fourth catalyst support subassembly and a fifth hole corresponding to the air exit.

Therefore, a problem urgently to be solved by those skilled in the art is how to solve the problem that the conventional case-type post-treatment apparatus cannot be installed as required.

### SUMMARY

In view of this, an object of the present application is to provide a generalized integrated DOC-DPF-SCR post-treatment apparatus, to achieve generalized matched installation for different vehicles.

To achieve the above object, the following technical solutions are provided according to the present application.

A generalized integrated DOC-DPF-SCR post-treatment apparatus includes a case, a DOC-DPF unit, two SCR units, an urea mixer, and an exhaust pipe. The number of the urea mixer is one or two. The case has a square cross-section, and the DOC-DPF unit and the exhaust pipe are respectively arranged at two diagonal corners with respect to the square cross-section. The two SCR units are symmetrically arranged with each other with respect to a diagonal of the square cross-section along which the DOC-DPF unit and the exhaust pipe are arranged. The urea mixer is symmetrically arranged with respect to the diagonal along which the DOC-DPF unit and the exhaust pipe are arranged, and the urea mixer is arranged between the DOC-DPF unit and the exhaust pipe. Exhaust gas in the DOC-DPF unit is discharged into the urea mixer to form mixed exhaust gas, and the mixed exhaust gas in the urea mixer is discharged into the SCR units, and then is discharged into the exhaust pipe after being processed by the SCR unit. An inlet of the exhaust pipe is arranged at a rear end of the case. An exhaust port of the exhaust pipe is arranged on a front end cover of the case, a rear end cover of the case, a bottom wall of the case or a side wall of the case.

Preferably, in the generalized integrated DOC-DPF-SCR post-treatment apparatus, in a case that the number of the urea mixer is one, an outlet of the urea mixer is in shunting communication with two inlets of the two SCR units by a second connection disk arranged at a front end of the case.

Preferably, in the generalized integrated DOC-DPF-SCR post-treatment apparatus, in a case that the number of the urea mixer is one and the two SCR units are respectively referred to as a first SCR unit and a second SCR unit, an outlet of the urea mixer is in communication with the first SCR unit by a second connection disk arranged at a front end of the case, and an outlet of the first SCR unit is in serial communication with an inlet of the second SCR unit by a third connection disk arranged at a rear end of the case.

Preferably, in the generalized integrated DOC-DPF-SCR post-treatment apparatus, in a case that the number of the urea mixers is two, an outlet of the DOC-DPF unit is in shunting communication with inlets of the two urea mixers by a first connection disk arranged at a rear end of the case, and outlets of the two urea mixers are in communication with inlets of the two SCR units in one-to-one correspondence respectively by two second connection disks arranged at a front end of the case.

Preferably, in the generalized integrated DOC-DPF-SCR post-treatment apparatus, a heat preservation structure is arranged in the case.

Preferably, in the generalized integrated DOC-DPF-SCR post-treatment apparatus, the heat preservation structure is made of thermal insulation cotton.

Preferably, in the generalized integrated DOC-DPF-SCR post-treatment apparatus, a mounting bracket for mounting the generalized integrated DOC-DPF-SCR post-treatment apparatus onto a vehicle frame is arranged on a side of the case where the SCR units and the exhaust pipe are arranged.

Preferably, in the generalized integrated DOC-DPF-SCR post-treatment apparatus, an intake pipe assembly is arranged on a front end cover of the case, and an inlet of the intake pipe assembly on the front end cover faces forward, upward or sideward.

Preferably, in the generalized integrated DOC-DPF-SCR post-treatment apparatus, a sensor and a urea nozzle are arranged in the case.

Compared with the conventional technology, the present application has the following beneficial effects.

In the generalized integrated DOC-DPF-SCR post-treatment apparatus according to the present application, the case has a square cross-section, the DOC-DPF unit and the exhaust pipe are respectively arranged at two diagonal corners with respect to the square cross-section of the case, and the two SCR units are arranged symmetrically with each other with respect to a diagonal along which the DOC-DPF unit and the exhaust pipe are arranged and the urea mixer is symmetrically arranged with respect to the diagonal along which the DOC-DPF unit and the exhaust pipe are arranged. The exhaust gas in the DOC-DPF unit is discharged into the urea mixer to form mixed exhaust gas, and the mixed exhaust gas in the urea mixer is discharged into the SCR units, and then is discharged into the exhaust pipe after being processed by the SCR units. The cross-section of the case of the generalized integrated DOC-DPF-SCR post-treatment apparatus is square, the DOC-DPF unit and the exhaust pipe inside the case are respectively arranged at two diagonal corners with respect to the square cross-section, and the two SCR units are arranged symmetrically with each other with respect to the diagonal along which the DOC-DPF unit and the exhaust pipe are arranged, and the urea mixer is symmetrically arranged with respect to the diagonal along which the DOC-DPF unit and the exhaust pipe are arranged. Therefore, with the generalized integrated DOC-DPF-SCR post-treatment apparatus, various functional units can be replaced conveniently in the later usage, the case can be arranged on the left or right side as needed, and intake and exhaust ways of the case can be configured flexibly and diversely, thereby achieving generalized matching installation for different vehicles.

### BRIEF DESCRIPTION OF THE DRAWINGS

In order to more clearly describe the embodiments of the present application or the technical solutions in the conventional technology, the drawings used in the description of the embodiments or the conventional technology will be briefly described below. Apparently, the drawings in the following description are merely embodiments of the present application. For those of ordinary skill in the art, other drawings may be obtained according to the provided drawings without creative efforts.
Figure 1 is a schematic structural diagram showing an internal layout of a generalized integrated DOC-DPF-SCR post-treatment apparatus according to an embodiment of the present application;
Figure 2 is a schematic structural diagram of a generalized integrated DOC-DPF-SCR post-treatment apparatus according to an embodiment of the present application;
Figure 3 is a schematic exploded structural diagram of a generalized integrated DOC-DPF-SCR post-treatment apparatus according to an embodiment of the present application;
Figure 4 is a schematic diagram showing an arrangement in which a generalized integrated DOC-DPF-SCR post-treatment apparatus according to an embodiment of the present application is installed on a right side of a vehicle frame;
Figure 5 is a schematic diagram showing an arrangement in which a generalized integrated DOC-DPF-SCR post-treatment apparatus according to an embodiment of the present application is installed on a left side of the vehicle frame;
Figure 6 is a schematic diagram showing an arrangement of an intake pipe assembly of a generalized integrated DOC-DPF-SCR post-treatment apparatus according to an embodiment of the present application;
Figure 7 is a schematic diagram showing an arrangement of an exhaust pipe of a generalized integrated DOC-DPF-SCR post-treatment apparatus according to an embodiment of the present application; and
Figure 8 is a schematic structural diagram showing an assembly of a generalized integrated DOC-DPF-SCR post-treatment apparatus according to an embodiment of the present application.

Reference numerals are listed as follows:

| | | | |
|---|---|---|---|
| 1 | case | 11 | front end cover |
| 12 | rear heat shield | 13 | rear end cover |
| 2 | SCR unit | 3 | exhaust pipe |
| 31 | exhaust port | 4 | urea mixer |
| 5 | DOC-DPF unit | 51 | DOC unit |
| 52 | DPF unit | 6 | intake pipe assembly |
| 7 | second connection disk | 8 | first connection disk |
| 9 | mounting bracket | A | differential pressure sensor |
| B | electronic integrated unit of a nitrogen oxide sensor | D | probe of a nitrogen oxide sensor |
| C | urea nozzle | E | temperature sensor |

### DETAILED DESCRIPTION OF THE EMBODIMENTS

A core of the present application is to provide a generalized integrated DOC-DPF-SCR post-treatment apparatus to achieve generalized matching installation for different vehicles.

The technical solutions in the embodiments of the present application will be clearly and completely described in the following with reference to the drawings in the embodiments of the present application. Apparently, the described embodiments are only a part of the embodiments of the present application, rather than all the embodiments. Based on the embodiments of the present application, all other embodiments obtained without creative efforts by those of ordinary skill in the art shall fall within the protection scope of the present application.

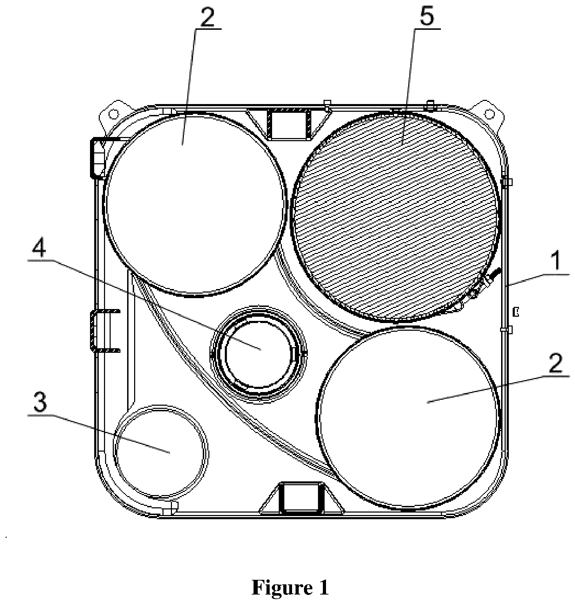

Referring to Figures 1 to 8, a generalized integrated DOC-DPF-SCR post-treatment apparatus is provided according to an embodiment of the present application, which includes a case 1, a DOC-DPF unit 5, two SCR units 2, one or two urea mixer 4, and an exhaust pipe 3. The DOC-DPF unit 5, the SCR units 2, the urea mixer 4, and the exhaust pipe 3 are all arranged in the case 1. The case 1 includes a front end cover 11, a rear end cover 13, and four side walls. The DOC-DPF unit 5 is formed by connecting a DOC unit 51 and a DPF unit 52 with each other via a clamp. The DOC unit 51 and the DPF unit 52 are configured to respectively perform oxidation catalysis and PM particle capture on the exhaust gas. The DOC-DPF unit 5 is connected to an intake pipe assembly 6 on the front end cover 11. A cross-section of the case 1 is square, that is, a cross-section parallel to the front end cover 11 and the rear end cover 13 is square. The DOC-DPF unit 5 and the exhaust pipe 3 are respectively arranged on two diagonal corners with respect to the square cross-section. The two SCR units 2 are symmetrically arranged with each other with respect to a diagonal along which the DOC-DPF unit 5 and the exhaust pipe 3 are arranged. Preferably, the two SCR units 2 are symmetrically arranged with each other on another two diagonal corners with respect to the square cross-section. The urea mixer 4 is symmetrically arranged with respect to the diagonal along which the DOC-DPF unit 5 and the exhaust pipe 3 are arranged. The exhaust gas in the DOC-DPF unit 5 is discharged into the urea mixer 4 to form mixed exhaust gas. The mixed exhaust gas in the urea mixer 4 is discharged into the SCR units 2, and then is discharged into the exhaust pipe 3 after being processed by the SCR units 2.

The operating process of the generalized integrated DOC-DPF-SCR post-treatment apparatus is described as follows. The exhaust gas enters the DOC-DPF unit 5 through the intake pipe assembly 6, and oxidation catalysis and PM particle capture are performed on the exhaust gas in the DOC-DPF unit 5. The exhaust gas enters the urea mixer 4 while urea is sprayed into the urea mixer 4, and the exhaust gas is uniformly mixed with the urea in the urea mixer 4 to form uniformly mixed gas. The uniformly mixed gas enters the SCR units 2 for catalytic conversion of nitrogen oxides. Finally, the exhaust gas is discharged from the SCR units 2 into the exhaust pipe 3 and is discharged away from the exhaust pipe 3.

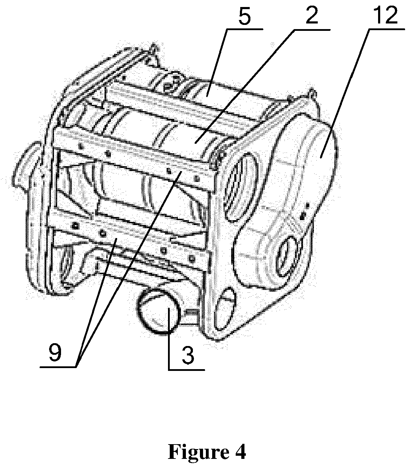

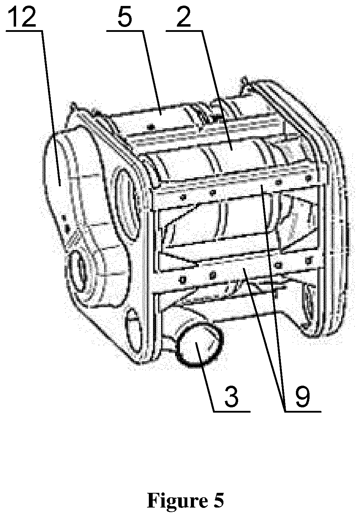

The cross-section of the case 1 of the generalized integrated DOC-DPF-SCR post-treatment apparatus is square, and inside the case 1, the DOC-DPF unit 5 and the exhaust pipe 3 are respectively arranged on two diagonal corners with respect to the square cross-section, and the two SCR units 2 are arranged symmetrically with each other with respect to the diagonal along which the DOC-DPF unit 5 and the exhaust pipe 3 are arranged, and the urea mixer 4 is symmetrically arranged with respect to the diagonal along which the DOC-DPF unit 5 and the exhaust pipe 3 are arranged. Therefore, with the generalized integrated DOC-DPF-SCR post-treatment apparatus, the various functional units can be replaced conveniently in the later usage. Besides, in order to facilitate the maintenance of the DOC-DPF unit 5, the DOC-DPF unit 5 is arranged outside the vehicle frame at an upper position. The generalized integrated DOC-DPF-SCR post-treatment apparatus can be installed on the left or right side of the vehicle frame, which can be realized by only adjusting an orientation of the generalized integrated DOC-DPF-SCR post-treatment apparatus. Since the case 1 is square, the apparatus will not be limited by the installation space once the orientation is adjusted. Referring to Figures 4 and 5, Figure 5 shows a case that the apparatus is arranged on the left side of the vehicle frame, and Figure 4 shows a case that the apparatus is arranged on the right side of the vehicle frame. With such arrangement, intake and exhaust ways of the generalized integrated DOC-DPF-SCR post-treatment apparatus can be configured flexibly and diversely according to assembly requirements of different vehicles, thereby achieving generalized matching installation for different vehicles.

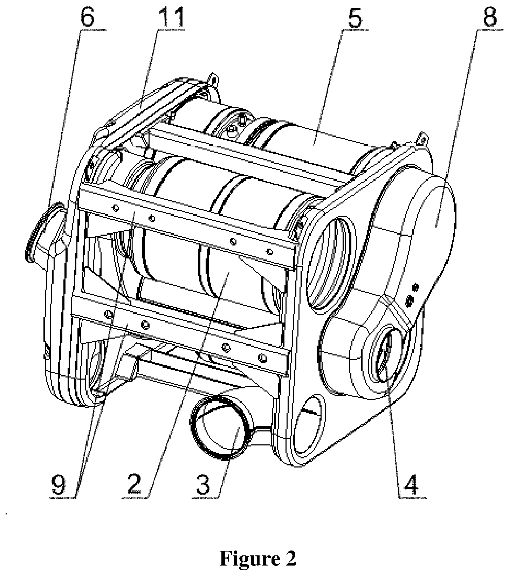

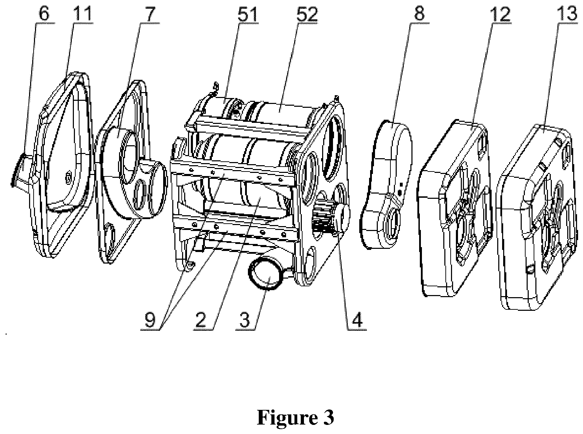

As for the structure in which both the SCR units 2 and the urea mixer 4 are symmetrically arranged with respect to the diagonal along which the DOC-DPF unit 5 and the exhaust pipe 3 are arranged, an arrangement of the SCR units 2 and the urea mixer 4 is provided according to an embodiment. As shown in Figures 2 and 3, two SCR units 2 are symmetrically arranged respectively on two diagonal corners with respect to the square cross-section of the case 1. The number of the urea mixer 4 is one, and the urea mixer 4 is arranged on the diagonal along which the DOC-DPF unit 5 and the exhaust pipe 3 are arranged, and the urea mixer 4 is arranged between the DOC-DPF unit 5 and the exhaust pipe 3. An outlet of the DOC-DPF unit 5 is in communication with an inlet of the urea mixer 4 by a first connection disk 8 arranged at a rear end of the case 1, an outlet of the urea mixer 4 is in shunting communication with two inlets of the two SCR units 2 by a second connection disk 7 arranged at a front end of the case 1, and two outlets of the two SCR units 2 are in communication with the exhaust pipe 3. That is, the exhaust gas is first inputted to the urea mixer 4 for mixing and then is discharged into the two SCR units 2 in two paths. The second connection disk 7 has a shunting function, which has one inlet and two outlets. The inlet of the second connection disk 7 is in communication with the outlet of the urea mixer 4, and the two outlets of the second connection disk 7 are respectively in communication with the inlets of the two SCR units 2.

Another arrangement of the SCR units 2 and the urea mixer 4 is provided according to another embodiment. The number of the urea mixer 4 is one, and the urea mixer 4 is arranged on the diagonal along which the DOC-DPF unit 5 and the exhaust pipe 3 are arranged, and the urea mixer 4 is arranged between the DOC-DPF unit 5 and the exhaust pipe 3. The two SCR units 2 are respectively referred to as a first SCR unit and a second SCR unit, the first SCR unit and the second SCR unit are respectively arranged on two diagonal corners with respect to the square cross-section of the case 1. The outlet of the DOC-DPF unit 5 is in communication with the inlet of the urea mixer 4 by the first connection disk 8 arranged at the rear end of the case 1, the outlet of the urea mixer 4 is in communication with an inlet of the first SCR unit by a second connection disk 7 arranged at the front end of the case 1, an outlet of the first SCR unit is in serial communication with an inlet of the second SCR unit by a third connection disk arranged at the rear end of the case 1, and an outlet of the second SCR unit is in communication with the exhaust pipe 3. That is, the exhaust gas is mixed with urea in the urea mixer 4 to form the mixed gas, the mixed gas is processed by catalytic conversion in the first SCR unit, then is processed by catalytic conversion again in the second SCR unit, and finally the processed gas is discharged away from the exhaust pipe 3. The second connection disk 7 herein has one inlet and one outlet to perform single communication between the urea mixer 4 and the first SCR unit, and the third connection disk has one inlet and one outlet to perform single communication between the first SCR unit and the second SCR unit.

A third arrangement of the SCR units 2 and the urea mixer 4 is further provided according to an embodiment. The number of the urea mixer 4 is two, and the two urea mixers 4 are symmetrically arranged with each other with respect to the diagonal along which the DOC-DPF unit 5 and the exhaust pipe 3 are arranged, and the two urea mixers 4 are arranged between the DOC-DPF unit 5 and the exhaust pipe 3. The outlet of the DOC-DPF unit 5 is in shunting communication with inlets of the two urea mixers 4 by a first connection disk 8 arranged at the rear end of the case 1, and outlets of the two urea mixers 4 are in communication with the inlets of the two SCR units 2 in one-to-one correspondence respectively by two second connection disks 8 arranged at the front end of the case 1. That is, the exhaust gas is divided into two paths after flowing out the DOC-DPF unit 5, and the two paths of exhaust gas respectively enter the two urea mixers 4 for mixing, and the mixed gas from each urea mixer 4 enters a corresponding SCR unit 2. The first connection disk 8 has one inlet and two outlets, which has the shunting function. The number of the second connection disk 7 is two, each of the second connection disk has one inlet and one outlet, and is in communication with one urea mixer 4 and one SCR unit 2.

The above three arrangements of the urea mixer 4 and the SCR units 2 each has a symmetrical structure, thereby realizing the arrangement of the case on the left or right side.

Further, in the present embodiment, a heat preservation structure is arranged in the case 1, which is configured to provide thermal-insulation protection for the generalized integrated DOC-DPF-SCR post-treatment apparatus.

Specifically, in the present embodiment, thermal insulation cotton is arranged between the front end cover 11 of the case 1 and components inside the case 1. Thermal insulation cotton is arranged between the rear end cover 13 of the case 1 and a rear heat shield 12 of the case 1. The side walls of the case 1 each has a double-layer structure, and thermal insulation cotton is also arranged in the double-layer structure. In addition, each unit in the case 1 may be provided with a double-layer structure and the thermal insulation cotton for heat-insulation. With the arrangement of multiple layers of thermal-insulation protection, the surface temperature of the post-treatment apparatus can be effectively reduced.

As shown in Figures 4 and 5, in the present embodiment, a mounting bracket 9 for mounting the apparatus onto a vehicle frame is arranged on a side of the case 1 where the SCR units 2 and the exhaust pipe 3 are arranged. Since the number of SCR units 2 is two, and the two SCR units 2 are symmetrically arranged with each other with respect to the diagonal along which the DOC-DPF unit 5 and the exhaust pipe 3 are arranged, there are two installation positions for the mounting bracket 9 on the case 1, and the two installation positions are symmetrically arranged with respect to the diagonal along which the DOC-DPF unit 5 and the exhaust pipe 3 are arranged. The mounting bracket can be arranged on any one of the two installation positions of the case 1, such that the case can be installed on the left side or the right side of the vehicle frame, and it can also be ensured that the DOC-DPF unit 5 is arranged outside the vehicle frame at an upper position, which facilitates maintenance.

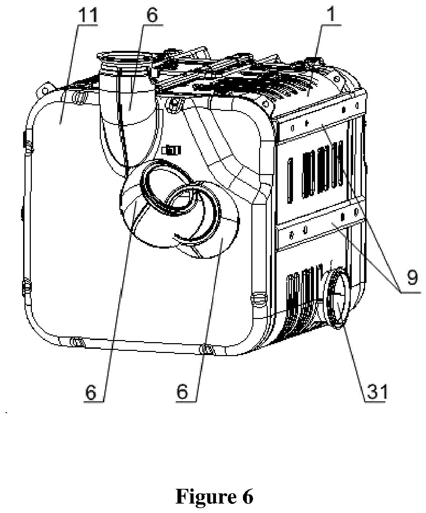

As shown in Figure 6, in the present embodiment, the intake pipe assembly 6 is arranged on the front end cover 11 of the case 1, and the inlet of the intake pipe assembly 6 on the front end cover 11 faces forward, upward or sideward. A punching hole is formed at different positions of the front end cover 11 and the intake pipe assembly 6 is directly arranged on the front end cover 11, such that the matching requirements of multiple intake ways such as front intake, side intake, and up intake can be realized, which is suitable for assembly arrangements for different vehicles. Moreover, one type of front end cover 11 is used for the schemes of forming a punching hole at different positions of the front end cover 11 and arranging the intake pipe assembly 6 on the front end cover 11, which effectively reduces the mold-making cost.

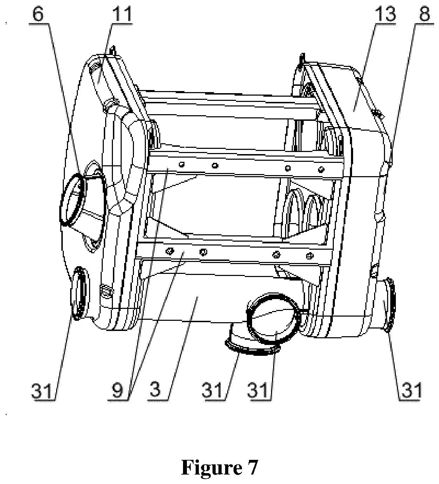

As shown in Figure 7, in the present embodiment, an exhaust port 31 of the exhaust pipe 3 is arranged on the front end cover 11 of the case 1, the rear end cover 13 of the case 1, a bottom wall of the case 1, or a side wall of the case 1. The outlet of the SCR unit 2 is usually arranged at the rear end of the case 1, thus the inlet of the exhaust pipe 3 is arranged at the rear end of the case 1. In a case that the exhaust port 31 of the exhaust pipe 3 is arranged on the front end cover 11, the exhaust pipe 3 is a long straight pipe that penetrates through the front end cover 11. In a case that the exhaust port 31 of the exhaust pipe 3 is arranged on the rear end cover 13, the exhaust pipe 3 is a short straight pipe that penetrates through the rear end cover 13. In a case that the exhaust port 31 of the exhaust pipe 3 is arranged on the bottom wall or the side wall of the case 1, the exhaust pipe 3 may be a bent pipe which is bent downward or bent toward the left or right direction, or a straight downward, leftward or rightward manifold pipe which is formed on a straight pipe. The exhaust pipe 3 may be connected to another component by a flange, or in various connection manners such as a plug-in manner. The exhaust gas may be exhausted in various ways, such that the matching field of the product is effectively widened, which is suitable for assembly on different vehicles.

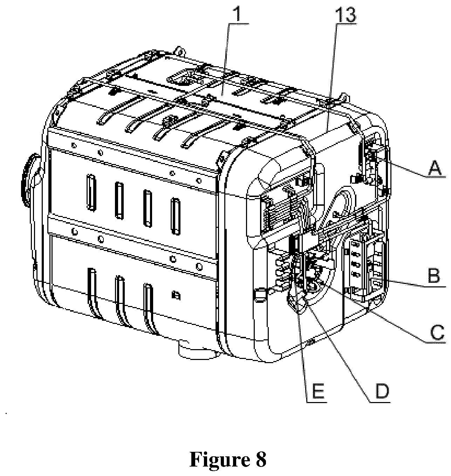

As shown in Figure 8, in the present embodiment, a sensor and a urea nozzle C are further arranged in the case 1. The sensor corresponds to a functional unit, such as a differential pressure sensor A, a probe D of a nitrogen oxides sensor, an electronic integrated unit B of the nitrogen oxides sensor, and a temperature sensor E. The sensors corresponding to the various functional units and the urea nozzle C are integrated in the case 1, thereby realizing assembly supply, thus reducing the complexity of matching assembly. The integrated assembly is not only convenient for installation and matching, but also conducive to increasing the temperature of each catalytic unit, improving the conversion efficiency of each functional unit, thereby effectively reducing the emission amount of exhaust pollutants.

The embodiments in this specification are described in a progressive manner, each embodiment focuses on the differences from other embodiments, and reference may be made to each other for the same or similar parts among the embodiments.

The above description of the disclosed embodiments enables those skilled in the art to implement or use the present application.

## Claims

1. A generalized integrated DOC-DPF-SCR post-treatment apparatus, comprising a case (1), a DOC-DPF unit (5), two SCR units (2), an urea mixer (4), and an exhaust pipe (3), wherein
the number of the urea mixer (4) is one or two;
the case (1) has a square cross-section;
the two SCR units (2) are arranged symmetrically with each other with respect to a diagonal of the square cross-section along which the DOC-DPF unit (5) and the exhaust pipe (3) are arranged;
exhaust gas in the DOC-DPF unit (5) is discharged into the urea mixer (4) to form mixed exhaust gas, the mixed exhaust gas in the urea mixer (4) is discharged into the SCR units (2), and then is discharged into the exhaust pipe (3) after being processed by the SCR units (2), **characterized in that**
the urea mixer (4) is symmetrically arranged with respect to the diagonal of the square cross-section along which the DOC-DPF unit (5) and the exhaust pipe (3) are arranged, and the urea mixer (4) is arranged between the DOC-DPF unit (5) and the exhaust pipe (3),
the DOC-DPF unit (5) and the exhaust pipe (3) are respectively arranged at two diagonal corners with respect to the square cross-section of the case (1),
an inlet of the exhaust pipe (3) is arranged at a rear end of the case (1), an exhaust port (31) of the exhaust pipe (3) is arranged on a front end cover (11) of the case (1), a rear end cover (13) of the case (1), a bottom wall of the case (1) or a side wall of the case (1).

2. The generalized integrated DOC-DPF-SCR post-treatment apparatus according to claim 1, wherein in a case that the number of the urea mixer (4) is one, an outlet of the urea mixer (4) is in shunting communication with two inlets of the two SCR units (2) by a second connection disk (7) arranged at a front end of the case (1).

3. The generalized integrated DOC-DPF-SCR post-treatment apparatus according to claim 1, wherein in a case that the number of the urea mixer (4) is one and the two SCR units (2) are respectively referred to as a first SCR unit and a second SCR unit, an outlet of the urea mixer (4) is in communication with the first SCR unit by a second connection disk (7) arranged at a front end of the case (1), and an outlet of the first SCR unit is in serial communication with an inlet of the second SCR unit by a third connection disk arranged at a rear end of the case (1).

4. The generalized integrated DOC-DPF-SCR post-treatment apparatus according to claim 1, wherein in a case that the number of the urea mixers (4) is two, an outlet of the DOC-DPF unit (5) is in shunting communication with inlets of the two urea mixers (4) by a first connection disk (8) arranged at a rear end of the case (1), and outlets of the two urea mixers (4) are in communication with inlets of the two SCR units (2) in one-to-one correspondence respectively by two second connection disks (7) arranged at a front end of the case (1).

5. The generalized integrated DOC-DPF-SCR post-treatment apparatus according to any one of claims 1 to 4, wherein a heat preservation structure is arranged in the case (1).

6. The generalized integrated DOC-DPF-SCR post-treatment apparatus according claim 5, wherein the heat preservation structure is made of thermal insulation cotton.

7. The generalized integrated DOC-DPF-SCR post-treatment apparatus according to any one of claims 1 to 4, wherein a mounting bracket (9) is arranged on a side of the case (1) where the SCR units (2) and the exhaust pipe (3) are arranged, and the mounting bracket (9) is configured to mount the generalized integrated DOC-DPF-SCR post-treatment apparatus onto a vehicle frame.

8. The generalized integrated DOC-DPF-SCR post-treatment apparatus according to any one of claims 1 to 4, wherein an intake pipe assembly (6) is arranged on a front end cover (11) of the case (1), and an inlet of the intake pipe assembly (6) on the front end cover (1) faces forward, upward or sideward.

9. The generalized integrated DOC-DPF-SCR post-treatment apparatus according to any one of claims 1 to 4, wherein a sensor and a urea nozzle (C) are arranged in the case (1).

## Patentansprüche

1. Allgemeine Nachbehandlungsvorrichtung mit integriertem DOC-DPF-SCR, umfassend ein Gehäuse (1), eine DOC-DPF-Einheit (5), zwei SCR-Einheiten (2), einen Harnstoffmischer (4) und ein Abgasrohr (3), wobei die Anzahl der Harnstoffmischer (4) eins oder zwei beträgt;
das Gehäuse (1) einen quadratischen Querschnitt hat;
die zwei SCR-Einheiten (2) in Bezug auf eine Diagonale des quadratischen Querschnitts, entlang welcher die DOC-DPF-Einheit (5) und das Abgasrohr (3) angeordnet sind, symmetrisch zueinander angeordnet sind;
Abgas in der DOC-DPF-Einheit (5) in den Harnstoffmischer (4) abgeführt wird, um Mischabgas zu bilden, das Mischabgas in dem Harnstoffmischer (4) in die SCR-Einheiten (2) abgeführt wird und, nachdem es in den SCR-Einheiten (2) verarbeitet wurde, dann in das Abgasrohr (3) abgeführt wird,
**dadurch gekennzeichnet, dass**
der Harnstoffmischer (4) in Bezug auf die Diagonale des quadratischen Querschnitts, entlang welcher die DOC-DPF-Einheit (5) und das Abgasrohr (3) angeordnet sind, symmetrisch angeordnet ist und der Harnstoffmischer (4) zwischen der DOC-DPF-Einheit (5) und dem Abgasrohr (3) angeordnet ist,
die DOC-DPF-Einheit (5) und das Abgasrohr (3) in Bezug auf den quadratischen Querschnitt des Gehäuses (1) jeweils an zwei diagonalen Ecken angeordnet sind,
ein Einlass des Abgasrohrs (3) an einer Rückseite des Gehäuses (1) angeordnet ist, eine Abgasöffnung (31) des Abgasrohrs (3) an einer vorderseitigen Abdeckung (11) des Gehäuses (1), einer rückseitigen Abdeckung (13) des Gehäuses (1), einer Bodenwand des Gehäuses (1) oder einer Seitenwand des Gehäuses (1) angeordnet ist.

2. Allgemeine Nachbehandlungsvorrichtung mit integriertem DOC-DPF-SCR nach Anspruch 1, wobei im Falle, dass die Anzahl des Harnstoffmischers (4) eins beträgt, ein Auslass des Harnstoffmischers (4) durch eine zweite Anschlussplatte (7), die an einer Vorderseite des Gehäuses (1) angeordnet ist, in Schiebeverbindung mit zwei Einlässen der zwei SCR-Einheiten (2) steht.

3. Allgemeine Nachbehandlungsvorrichtung mit integriertem DOC-DPF-SCR nach Anspruch 1, wobei im Falle, dass die Anzahl des Harnstoffmischers (4) eins beträgt und die zwei SCR-Einheiten (2) als eine erste SCR-Einheit bzw. eine zweite SCR-Einheit bezeichnet werden, ein Auslass des Harnstoffmischers (4) durch eine zweite Anschlussplatte (7), die an einer Vorderseite des Gehäuses (1) angeordnet ist, in Verbindung mit der ersten SCR-Einheit steht und ein Auslass der ersten SCR-Einheit durch eine dritte Anschlussplatte, die an einer Rückseite des Gehäuses (1) angeordnet ist, in Reihenverbindung mit einem Einlass der zweiten SCR-Einheit steht.

4. Allgemeine Nachbehandlungsvorrichtung mit integriertem DOC-DPF-SCR nach Anspruch 1, wobei im Falle, dass die Anzahl der Harnstoffmischer (4) zwei beträgt, ein Auslass der DOC-DPF-Einheit (5) durch eine erste Anschlussplatte (8), die an einer Rückseite des Gehäuses (1) angeordnet ist, in Schiebeverbindung mit Einlässen der zwei Harnstoffmischer (4) steht und Auslässe der zwei Harnstoffmischer (4) jeweils durch zwei zweite Anschlussplatten (7), die an einer Vorderseite des Gehäuses (1) angeordnet sind, in Verbindung mit Einlässen der zwei SCR-Einheiten (2) in Eins-zu-eins-Übereinstimmung stehen.

5. Allgemeine Nachbehandlungsvorrichtung mit integriertem DOC-DPF-SCR nach einem der Ansprüche 1 bis 4, wobei eine Wärmeschutzstruktur in dem Gehäuse (1) angeordnet ist.

6. Allgemeine Nachbehandlungsvorrichtung mit integriertem DOC-DPF-SCR nach Anspruch 5, wobei die Wärmeschutzstruktur aus wärmedämmender Baumwolle besteht.

7. Allgemeine Nachbehandlungsvorrichtung mit integriertem DOC-DPF-SCR nach einem der Ansprüche 1 bis 4, wobei eine Montagehalterung (9) an einer Seite des Gehäuses (1) angeordnet ist, wo die SCR-Einheiten (2) und das Abgasrohr (3) angeordnet sind, und die Montagehalterung (9) zum Montieren der allgemeinen Nachbehandlungsvorrichtung mit integriertem DOC-DPF-SCR auf einen Fahrzeugrahmen konfiguriert ist.

8. Allgemeine Nachbehandlungsvorrichtung mit integriertem DOC-DPF-SCR nach einem der Ansprüche 1 bis 4, wobei eine Ansaugrohrbaugruppe (6) an einer vorderseitigen Abdeckung (11) des Gehäuses (1) angeordnet ist und ein Einlass der Ansaugrohrbaugruppe (6) an der vorderseitigen Abdeckung (1) nach vorne, nach oben oder zur Seite zeigt.

9. Allgemeine Nachbehandlungsvorrichtung mit integriertem DOC-DPF-SCR nach einem der Ansprüche 1 bis 4, wobei ein Sensor und eine Harnstoffdüse (C) in dem Gehäuse (1) angeordnet sind.

## Revendications

1. Appareil unifié généralisé de post-traitement à convertisseur catalytique d'oxydation diesel-filtre à particules diesel-convertisseur catalytique à réduction sélective, DOC-DPF-SCR, comprenant un carter (1), une unité de DOC-DPF (5), deux unités de SCR (2), un mélangeur à urée (4) et un conduit d'échappement (3), dans lequel
le nombre du mélangeur à urée (4) est égal à un ou deux ; le carter (1) possède une section transversale carrée ; les deux unités de SCR (2) sont agencées de manière symétrique l'une à l'autre par rapport à une diagonale de la section transversale carrée le long de laquelle l'unité de DOC-DPF (5) et le conduit d'échappement (3) sont agencés ;
un gaz d'échappement dans l'unité de DOC-DPF (5) est refoulé dans le mélangeur à urée (4) pour former un gaz d'échappement mélangé, le gaz d'échappement mélangé dans le mélangeur à urée (4) est refoulé dans les unités de SCR (2), et est ensuite refoulé dans le conduit d'échappement (3) après avoir été traité par les unités de SCR (2), **caractérisé en ce que**
le mélangeur à urée (4) est agencé de manière symétrique par rapport à la diagonale de la section transversale carrée le long de laquelle l'unité de DOC-DPF (5) et le conduit d'échappement (3) sont agencés, et le mélangeur à urée (4) est agencé entre l'unité de DOC-DPF (5) et le conduit d'échappement (3),
l'unité de DOC-DPF (5) et le conduit d'échappement (3) sont respectivement agencés au niveau de deux coins diagonaux par rapport à la section transversale carrée du carter (1),
une entrée du conduit d'échappement (3) est agencée à une extrémité arrière du carter (1), un orifice d'échappement (31) du conduit d'échappement (3) est agencé sur un couvercle d'extrémité avant (11) du carter (1), un couvercle d'extrémité arrière (13) du carter (1), une paroi inférieure du carter (1) ou une paroi latérale du carter (1).

2. Appareil unifié généralisé de post-traitement à DOC-DPF-SCR selon la revendication 1, dans lequel dans le cas où le nombre du mélangeur à urée (4) est égal à un, une sortie du mélangeur à urée (4) est en communication de dérivation avec deux entrées des deux unités de SCR (2) par un deuxième disque de liaison (7) agencé à une extrémité avant du carter (1).

3. Appareil unifié généralisé de post-traitement à DOC-DPF-SCR selon la revendication 1, dans lequel dans le cas où le nombre du mélangeur à urée (4) est égal à un et les deux unités de SCR (2) sont respectivement appelées première unité de SCR et seconde unité de SCR, une sortie du mélangeur à urée (4) est en communication avec la première unité de SCR par un deuxième disque de liaison (7) agencé à une extrémité avant du carter (1), et une sortie de la première unité de SCR est en communication en série avec une entrée de la seconde unité de SCR par un troisième disque de liaison agencé à une extrémité arrière du carter (1).

4. Appareil unifié généralisé de post-traitement à DOC-DPF-SCR selon la revendication 1, dans lequel dans le cas où le nombre des mélangeurs à urée (4) est égal à deux, une sortie de l'unité de DOC-DPF (5) est en communication de dérivation avec les entrées des deux mélangeurs à urée (4) par un premier disque de liaison (8) agencé à une extrémité arrière du carter (1), et les sorties des deux mélangeurs à urée (4) sont en communication avec les entrées des deux unités de SCR (2) en correspondance biunivoque respectivement par deux deuxièmes disques de liaison (7) agencés à une extrémité avant du carter (1).

5. Appareil unifié généralisé de post-traitement à DOC-DPF-SCR selon l'une quelconque des revendications 1 à 4, dans lequel une structure de conservation de chaleur est agencée dans le carter (1).

6. Appareil unifié généralisé de post-traitement à DOC-DPF-SCR selon la revendication 5, dans lequel la structure de conservation de chaleur est constituée de coton d'isolation thermique.

7. Appareil unifié généralisé de post-traitement à DOC-DPF-SCR selon l'une quelconque des revendications 1 à 4, dans lequel un support de montage (9) est agencé sur un côté du carter (1) où les unités de SCR (2) et le conduit d'échappement (3) sont agencés, et le support de montage (9) est configuré pour monter l'appareil unifié généralisé de post-traitement à DOC-DPF-SCR sur un châssis de véhicule.

8. Appareil unifié généralisé de post-traitement à DOC-DPF-SCR selon l'une quelconque des revendications 1 à 4, dans lequel un ensemble conduit d'admission (6) est agencé sur un couvercle d'extrémité avant (11) du carter (1), et une entrée de l'ensemble conduit d'admission (6) sur le couvercle d'extrémité avant (1) fait face vers l'avant, vers le haut ou vers le côté.

9. Appareil unifié généralisé de post-traitement à DOC-DPF-SCR selon l'une quelconque des revendications 1 à 4, dans lequel un capteur et une buse à urée (C) sont agencés dans le carter (1).
